# EUROPÄISCHE PATENTSCHRIFT

(11) **EP 2 364 889 B1**
(45) Veröffentlichungstag und Bekanntmachung des Hinweises auf die Patenterteilung: **22.05.2013**
(21) Anmeldenummer: 11157168.3
(22) Anmeldetag: 07.03.2011
(51) Int. Cl.: B60T 1/02, H02K 49/04, H02P 7/34, B60L 7/28, H02K 19/38

(54) **Stromeinspeiseeinrichtung für eine stromgespeiste Bremse eines Fahrzeugs**
Electric power supply for an electric vehicle brake
Dispositif d'alimentation en courant pour un frein alimenté en courant d'un véhicule

(30) Priorität: 11.03.2010 DE 102010011218
(43) Veröffentlichungstag der Anmeldung: 14.09.2011
(73) Patentinhaber: Siemens Aktiengesellschaft, 80333 München (DE)
(72) Erfinder: Schmitt, Volker, 91058 Erlangen (DE); Fuchs, Andreas, Dr., 91056 Erlangen (DE)

(56) Entgegenhaltungen:
- DE-A1- 3 908 234
- US-A- 4 467 267

## Beschreibung

Die Erfindung betrifft eine Stromeinspeiseeinrichtung für eine stromgespeiste Bremse eines Fahrzeugs mit einem zur Erzeugung elektrischer Energie für die stromgespeiste Bremse dienenden Speisegenerator, dessen Läuferwicklungen auf einer bei einer Bewegung des Fahrzeugs angetriebenen Achse befestigt sind und dessen ständerseitige Generatorwicklungen an Stromeingänge der stromgespeisten Bremse angeschlossen sind.

Eine derartige Stromeinspeiseeinrichtung ist aus der deutschen Offenlegungsschrift DE 39 08 234 A1 bekannt. Bei dieser bekannten Stromeinspeiseeinrichtung für eine als Retarder ausgebildete stromgespeiste Bremse ist der Retarder zur Erzeugung seiner elektrischen Energie mit einem eigenen Generator versehen, welcher von einem Antriebsaggregat des Fahrzeugs antreibbar ist. Als Antriebsaggregat kommt der Motor des Fahrzeugs, das Getriebe des Fahrzeugs oder ggf. eine angetriebene Achse des Fahrzeugs infrage. Ständerseitige Wicklungen des Speisegenerators, der bevorzugt als Drehstromgenerator ausgebildet ist, sind an Stromeingänge der Wirbelstrombremse angeschlossen.

Der Erfindung liegt die Aufgabe zugrunde, eine Stromeinspeiseeinrichtung für eine stromgespeiste Bremse eines Fahrzeugs vorzuschlagen, mit der sich mit vergleichsweise geringem Aufwand auch der hohe Leistungsbedarf einer stromgespeisten Bremse, insbesondere eines als Wirbelstrombremse ausgeführten Retarders, decken lässt.

Zur Lösung dieser Aufgabe ist bei einer Stromeinspeiseeinrichtung der eingangs angegebenen Art erfindungsgemäß ein Steuergerät zur Erzeugung eines an eine jeweils aktuelle Bremsanforderung angepassten Ansteuerstroms vorgesehen und auf der Achse sind auch Läuferwicklungen eines Erregergenerators befestigt, dessen ständerseitige Erregerwicklungen mit einem Ansteuerstrom beaufschlagbar sind, wobei das Steuergerät eingangsseitig an ein Bordnetz des Fahrzeugs oder eine Batterie des Fahrzeugs und ausgangsseitig an die Erregerwicklungen des Erregergenerators angeschlossen ist und wobei die Läuferwicklungen des Speisegenerators und des Erregergenerators schleifringkontaktfrei miteinander elektrisch verbunden sind.

Ein wesentlicher Vorteil der erfindungsgemäßen Stromeinspeiseeinrichtung besteht darin, dass durch die Kombination eines mit einem Ansteuerstrom beaufschlagten Erregergenerators und eines Speisegenerators eine Stromeinspeiseeinrichtung geschaffen ist, mit der bei einer geringen Belastung der Batterie des Bordnetzes des Fahrzeugs durch einen vergleichsweise kleinen Ansteuerstrom eine hohe Leistung bzw. ein hoher Strom für die stromgespeiste Bremse erzeugt werden kann. Dabei ist durch die elektrische Verbindung der Läuferwicklungen des Speisegenerators und des Erregergenerators ohne Schleifringkontakte ein Aufbau geschaffen, der nicht nur mit relativ geringem Aufwand herstellbar ist, sondern der auch weitgehend wartungsfrei und kompakt ist. Da außerdem zur Erzeugung des Ansteuerstroms für die Erregerwicklungen des Erregergenerators das Steuergerät zur Erzeugung eines an die jeweils aktuelle Bremsanforderung angepassten Ansteuerstroms vorgesehen ist, das eingangsseitig an das Bordnetz des Fahrzeugs oder eine Batterie des Fahrzeugs und ausgangsseitig an die Erregerwicklungen des Erregergenerators angeschlossen ist, lässt sich je nach aktueller Bremsanforderung die Bremswirkung im Hinblick auf die aktuelle Bremsanforderung genau anpassen.

An sich ist aus der Patentschrift US 4 467 267 A ein bürstenloser Wechselstromgenerator bekannt, bei dem auf einer Antriebswelle neben einer Läuferwicklung eines Hauptgenerators auch Läuferwicklungen eines Erregers befestigt sind und bei dem die Läuferwicklungen des Erregers und die Läuferwicklung des Hauptgenerators bürstenlos miteinander elektrisch verbunden sind. Dabei wird die Antriebswelle aber von einem Antrieb mit konstanter Geschwindigkeit angetrieben. Eine ebenfalls auf der Antriebswelle angeordnete Rotorstruktur eines Permanentmagnet-Generators induziert in einer ständerseitigen Wicklung des Permanentmagnet-Generators einen Strom, wobei die ständerseitige Wicklung des Permanentmagnet-Generators mit einer ständerseitigen Wicklung des Erregers elektrisch verbunden und die ständerseitigen Wicklung des Erregers durch den in der ständerseitigen Wicklung des Permanentmagnet-Generators induzierten Strom beaufschlagt ist. Eine Steuerung des den Erreger beaufschlagenden Stromes ist dabei nicht vorgesehen.

Bei der erfindungsgemäßen Stromeinspeiseeinrichtung kann die schleifringkontaktfreie Verbindung der Läuferwicklungen des Speisegenerators und des Erregergenerators miteinander auf unterschiedliche Weise erreicht werden. So wird es als vorteilhaft angesehen, wenn die Läuferwicklungen des Speise- und des Erregergenerators über eine an der Achse befestigte Gleichrichterschaltung elektrisch miteinander verbunden sind.

Bei einer besonders vorteilhaften Stromeinspeiseeinrichtung gemäß der Erfindung mit schleifringkontaktfrei miteinander verbundenen Läuferwicklungen des Speisegenerators und des Erregergenerators sind die Läuferwicklungen des Speise- und des Erregergenerators jeweils mindestens zweiphasig ausgebildet, und mindestens eine Läuferwicklung des Speise- und des Erregergenerators sind überkreuzt miteinander elektrisch verbunden. Der besondere Vorteil dieser Ausführungsform der erfindungsgemäßen Stromeinspeiseeinrichtung besteht darin, dass allein durch Überkreuzen mindestens einer Läuferwicklung des Speise- und des Erregergenerators Schleifringkontakte und auch eine rotierende Gleichrichterschaltung vermieden sind.

Um eine Überprüfung der erfindungsgemäßen Stromeinspeiseeinrichtung hinsichtlich ihrer einwandfreien Funktion zu ermöglichen, gewissermaßen also eine Art Bremsprobe durchzuführen, ist es vorteilhaft, dass eine Überwachungseinheit vorhanden ist, die über Überwachungsausgänge des Steuergeräts mit mindestens einer Generatorwicklung des Speisegenerators verbunden ist; die Überwachungseinheit kann als Stromdurchgangsprüfeinrichtung oder als Induktionspannungsmesseinrichtung ausgebildet sein.

Vorteilhaft ist es ferner, wenn eine Überwachungseinrichtung vorhanden ist, die über Überwachungsausgänge mit mindestens einer ständerseitigen Erregerwicklung des Erregergenerators verbunden ist, und die Überwachungseinrichtung als Stromdurchgangsprüfeinrichtung oder als Induktionspannungsmesseinrichtung ausgebildet ist.

Ebenfalls der Bremssicherheit dient eine Ausführungsform der erfindungsgemäßen Stromeinspeiseeinrichtung, bei der an eine Schnellbremsschleife eine Reihenschaltung aus einem Ladekondensator und mindestens einer Diode angeschlossen ist und bei spannungsloser Schnellbremsschleife selbsttätig eine elektrische Verbindung zwischen den Ladekondensator und den Erregerwicklungen des Erregerstroms einschaltbar ist. Diese Ausführungsform der erfindungsgemäßen Stromeinspeiseeinrichtung ermöglicht einen zuverlässigen Weiterbetrieb der stromgespeisten Bremse auch dann, wenn der Ansteuerstrom ausgefallen ist.

Ferner dient es der Sicherheit bzw. Zuverlässigkeit der erfindungsgemäßen Stromeinspeiseeinrichtung, wenn über eine Schnellbremsschleife eine Reihenschaltung einer Sicherheitsbatterie und einer Diode aktivierbar ist, um den Erregergenerator zu erregen.

Ergänzend dient es der Sicherheit beim Bremsen, wenn die bei der erfindungsgemäßen Stromeinspeiseeinrichtung für eine als Wirbelstrombremse ausgebildete stromgespeiste Bremse bei spannungsloser Schnellbremsschleife selbsttätig eine elektrische Verbindung mit einem Gleichrichter zwischen den Stromeingängen der Wirbelstrombremse und den Erregerwicklungen des Erregergenerators einschaltbar ist. Damit ist eine Selbsterregung mit Initialisierung aus der magnetischen Remanenz im Stator des Erregergenerators möglich. Dabei weist vorteilhafterweise die elektrische Verbindung als ein Einschaltelement einen Relaisschalter oder ein elektronisches Schaltelement auf.

Die erfindungsgemäße Stromeinspeiseeinrichtung kann an beliebig geeigneter Stelle im Antriebsstrang eines Fahrzeuges angebracht sein; als besonders vorteilhaft wird es jedoch angesehen, wenn die bei einer Bewegung des Fahrzeugs angetriebene Achse eine zur Bewegung des Fahrzeugs vorgesehene Achse ist. Eine solche Ausführungsform wird man bevorzugt bei Anhängern von Lastkraftwagen bzw. bei Wagen eines Schienenfahrzeugs anwenden.

Es kann aber ggf. auch vorteilhaft sein, wenn die bei einer Bewegung des Fahrzeugs angetriebene Achse eine generatoreigene Achse ist, die über ein Getriebe von einer zur Bewegung des Fahrzeugs vorgesehenen Achse angetrieben wird, weil dann auch die Möglichkeit gegeben ist, den Erreger- und den Speisegenerator räumlich entfernt von der angetriebenen Achse des Fahrzeugs anzuordnen, was unter anderem aus Raumgründen vorteilhaft sein kann. Als Getriebe kommt vorzugsweise ein Zahnriemengetriebe mit freiwählbarer Über- oder Untersetzung infrage.

Zur weiteren Erläuterung der Erfindung ist in
- Figur 1: ein Ausführungsbeispiel der erfindungsgemäßen Stromeinspeiseeinrichtung mit einer Gleichrichterschaltung zwischen den Läuferwicklungen des Speise- und des Erregergenerators, in
- Figur 2: ein Ausführungsbeispiel der erfindungsgemäßen Stromeinspeiseeinrichtung mit gekreuzten Läuferwicklungen des Erreger- und des Speisegenerators und in
- Figur 3: ein weiteres Ausführungsbeispiel der gekreuzten Läuferwicklungen von Erreger- und Speisegenerator dargestellt.

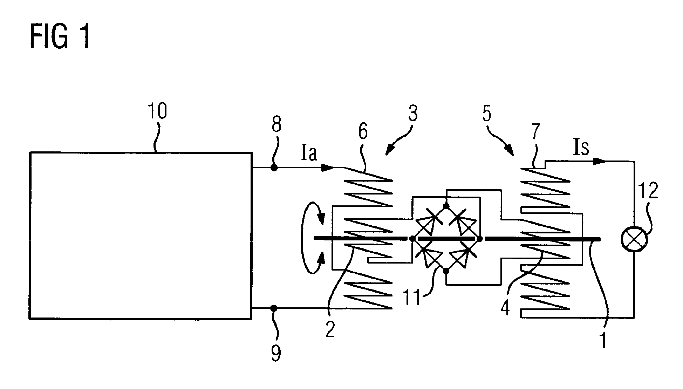

Wie die Figur 1 zeigt, sind auf einer Achse 1 eines ansonsten nicht dargestellten Fahrzeugs Läuferwicklungen 2 eines Erregergenerator 3 und Läuferwicklungen 4 eines Speisegenerator 5 angeordnet; in der Figur 1 ist der besseren Übersichtlichkeit halber nur jeweils eine Läuferwicklung 2 bzw. 4 gezeigt. Ständerseitige Erregerwicklungen 6 des Erregergenerators 3 und ständerseitige Generatorwicklungen 7 des Speisegenerators 5 sind in nicht dargestellter Weise an dem Fahrzeug angebracht. Die Erregerwicklungen 6 sind an Ausgänge 8 und 9 eines Steuergerätes 10 angeschlossen. Über diese Ausgänge 8 und 9 wird der Erregergenerator 3 entsprechend der jeweiligen Bremsanforderung mit einem Ansteuerstrom Ia beaufschlagt.

Die Läuferwicklung 2 des Erregergenerators 3 ist über eine Gleichrichterschaltung 11 mit der Läuferwicklung 4 des Speisegenerators 5 elektrisch verbunden. Die nicht gezeigten weiteren Läuferwicklungen sind über entsprechende Gleichrichterschaltungen miteinander verbunden. In den ständerseitigen Generatorwicklungen 7 des Speisegenerators 5 wird bei einer Erregung des Erregergenerators 3 und bei angetriebener Achse 1 ein Speisestrom Is für eine stromgespeiste Bremse 12 erzeugt wird, bei der es sich bevorzugt um eine Wirbelstrombremse handelt.

Durch den geschilderten Aufbau von Erregergenerator 3 und Speisegenerator 7 mit Läuferwicklungen 2 und 4 auf der gemeinsamen Achse 1 lässt sich erreichen, dass mittels eines vergleichsweise kleinen Ansteuerstromes Ia ein großer Einspeisestrom Is für die Bremse 12 erzeugt wird, wodurch sich im Bedarfsfall eine sehr starke Bremswirkung erzielen lässt. Das Steuergerät 10 bzw. das an dieses angeschlossene Bordnetz wird dabei nur vergleichsweise geringfügig beansprucht.

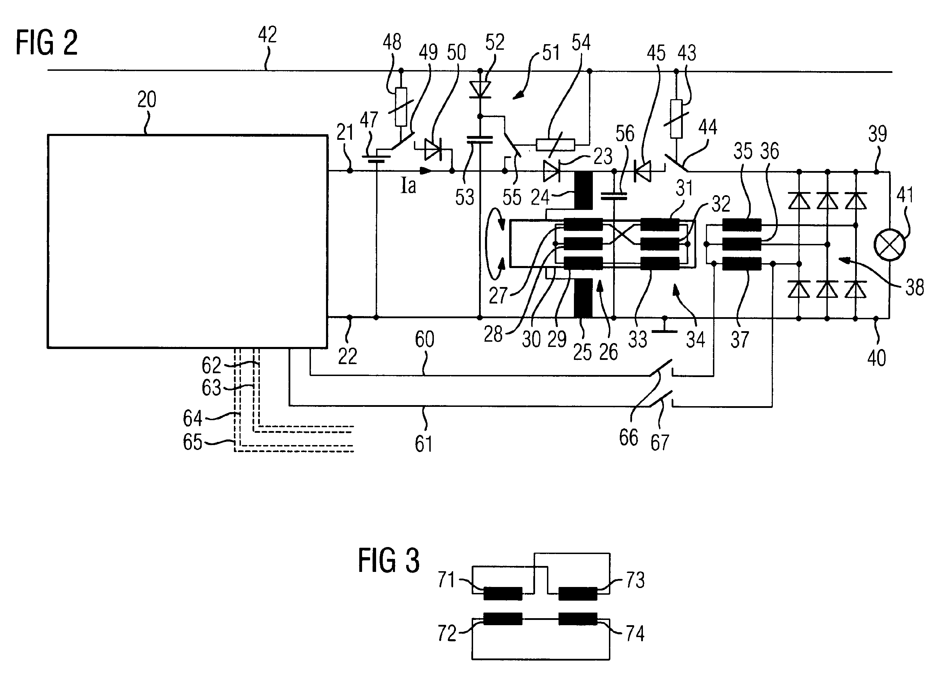

Das Ausführungsbeispiel nach Figur 2 zeigt ein weiteres Ausführungsbeispiel der erfindungsgemäßen Stromeinspeiseeinrichtung mit einem Steuergerät 20, das mit seinen Ausgängen 21 und 22 über einen Gleichrichter 23 an Erregerwicklungen 24 und 25 des Erregergenerators 26 angeschlossen ist. Es kann somit ein Ansteuerstrom Ia in die Erregerwicklungen 24 und 25 eingespeist werden. Läuferwicklungen 27, 28 und 29 des hier als Dreiphasengenerator ausgebildeten Erregergenerators 26 sind auf einer Achse 30 aufgebracht, die von dem auch hier nicht dargestellten Fahrzeug angetrieben ist. Fließt also ein Ansteuerstrom Ia, und wird die Achse 30 angetrieben, dann fließt ein Strom durch die Wicklungen 27 und 29 sowie durch ebenfalls auf der Achse 30 angeordnete Wicklungen 31, 32 und 33 des Speisegenerators 34, dessen Generatorwicklungen 35, 36 und 37 an eine Gleichrichteranordnung 38 angeschlossen sind. An der Gleichrichteranordnung 38 liegt mit ihren Stromeingängen 39 und 40 eine stromgespeiste Bremse 41, bei der es sich bevorzugt wiederum um eine Wirbelstrombremse handelt. In dem dargstellten Ausführungsbeispiel sind die Läuferwicklungen 27 und 31 überkreuzt miteinander verbunden, womit sich unter Aufwands- und Gewichtsersparnis eine rotierende Gleichrichterschaltung zwischen den Läuferwicklungen von Erreger- und Speisegenerator vermeiden lässt. Die übrigen Läuferwicklungen der beiden Generatoren sind normal miteinander direkt verbunden. Es können auch mehrere Läuferwicklungen überkreuzt miteinander verbunden werden.

Die erfindungsgemäße Stromeinspeiseeinrichtung bietet aufgrund ihrer Ausführung die vorteilhafte Möglichkeit, sie durch einfache ergänzende schaltungstechnische Maßnahmen sehr sicher und zuverlässig ausgestalten zu können:

Wie die Figur 2 nämlich zeigt, ist über eine Schnellbremsschleife 42 ein Relais 43 betätigbar, das mit seinem Kontakt 44 eine elektrische Verbindung von den Ausgängen der Gleichrichteranordnung 38 Stromeingänge 39 und 40 der Wirbelstrombremse 41 über eine Diode 45 zu den Erregerwicklungen 24 und 25 des Erregergenerators 26 herstellen kann. Damit wird von der Schnellbremsschleife 42 durch Beaufschlagung des Relais 43 eine Selbsterregung freigeschaltet, die in Kombination mit der magnetischen Remanenz die Wirkung der Wirbelstrombremse 41 zusätzlich verstärkt bzw. bei Ausfall des Ansteuerstroms Ia die Wirkung der Wirbelstrombremse 41 weiterhin aufrechterhält. Somit ist ein hoher Grad an Sicherheit geschaffen.

Die Figur 2 zeigt ferner, dass eine Sicherheitsbatterie 47 vorgesehen ist, aus der dem Erregergenerator 26 ein Erregerstrom zuführbar ist, wenn wegen Spannungslosfallen der Schnellbremsschleife 42 ein weiteres Relais 48 unter Schließung seines Kontaktes 49 aberregt wird. Dann fließt über eine Diode 50 der Ansteuerstrom aus der Sicherheitsbatterie 47 über das Gleichrichterelement 50 in die Erregerwicklung 24 und 25 und sorgt dafür, dass auch bei einem Ausfallen des Bordnetzes und damit des Ansteuerstroms selbst bei zusätzlichem Ausfall der Selbsterregung die stromgespeiste Bremse bzw. Wirbelstrombremse 41 wirksam arbeitet.

Zur Sicherheit trägt ferner eine Reihenschaltung 51 bei, die aus einer Diode 52 in Reihe mit einem Ladekondensator 53 besteht. Diese Reihenschaltung 51 ist zwischen die Schnellbremsschleife 42 und den Stromausgang 22 des Steuergerätes 20 geschaltet; über sie wird bei nicht aktivierter Schnellbremsschleife 42 der weitere Ladekondensator 53 aufgeladen. Über ein Relais 54 wird ein Abfall der Spannung an der Schnellbremsschleife 42 im Bremsfalle erfasst; es schließt sich dann ein Kontakt 55 dieses Relais und erlaubt eine Speisung der Erregerwicklungen 24 und 25 des Erregergenerators 26 aus dem Ladekondensator 53 über den Gleichrichter 23.

Die Figur 2 zeigt ferner, dass die dargestellte Stromeinspeiseeinrichtung die Möglichkeit bietet, einen einwandfreien Zustand der Generatorwicklungen 35 bis 37 des Speisegenerators 34 zu überprüfen, indem im dargestellten Falle von dem Steuergerät 20 über Prüfleitungen 60 und 61 sowie nur angedeutete weitere Prüfleitungen 62 und 63 sowie 64 und 65 über Kontakte 66 und 67 ein Strom durch die Wicklungen 35 bis 37 geschickt wird, wozu dann die Kontakte 66 und 67 zur Überprüfung geschlossen sind. Diese Überprüfung erfolgt selbstverständlich im Ruhebetrieb der Bremse 41.

In der Figur 3 ist eine andere Ausführungsform des Speisegenerators und des Erregergenerators hinsichtlich der Schaltung ihrer Läuferwicklungen gezeigt. Die Läuferwicklungen des hier nicht weiter dargestellten Erregergenerators bestehen hier nur aus zwei Wicklungen 71 und 72. Ebenso weist der Speisegenerator zwei Läuferwicklungen 73 und 74 auf. Die Wicklungen 71 und 73 sind überkreuzt miteinander verbunden, während die Wicklungen 72 und 74 miteinander mit normaler Polung verbunden sind.Die Wicklungen 71 und 73 sind gegenüber den Wicklungen 72 und 74, bezogen auf die Läuferaches, räumlich gedreht, üblicherweise um 90° elektrisch. Dadurch lässt sich wiederum eine Gleichrichterschaltung vermeiden.

Die Erregerwicklungen und die Generatorwicklungen des Erregergenerators 26 bzw. Speisegenerators 24 sind so ausgebildet, wie es im Zusammenhang mit der Figur 2 ausführlich erläutert worden ist.

## Patentansprüche

1. Stromeinspeiseeinrichtung für eine stromgespeiste Bremse (12; 41) eines Fahrzeugs mit
• einem zur Erzeugung elektrischer Energie für die stromgespeiste Bremse (12; 41) dienenden Speisegenerator (5; 34), dessen Läuferwicklungen (4; 31, 32, 33) auf einer bei einer Bewegung des Fahrzeugs angetriebenen Achse (1) befestigt sind und dessen ständerseitige Generatorwicklungen (7; 35, 36, 37) an Stromeingänge (39, 40) der stromgespeisten Bremse (12; 41) angeschlossen sind,
**dadurch gekennzeichnet, dass**
• ein Steuergerät (10; 20) zur Erzeugung eines an eine jeweils aktuelle Bremsanforderung angepassten Ansteuerstroms (Ia) vorgesehen ist und dass
• auf der Achse (1) auch Läuferwicklungen (2; 27, 28, 29) eines Erregergenerators (3) befestigt sind, dessen ständerseitige Erregerwicklungen (6; 24, 25) mit dem Ansteuerstrom (Ia) beaufschlagbar sind,
• wobei das Steuergerät (10; 20) eingangsseitig an ein Bordnetz des Fahrzeugs oder eine Batterie des Fahrzeugs und ausgangsseitig an die Erregerwicklungen (6; 24, 25) des Erregergenerators (3; 26) angeschlossen ist und
• wobei die Läuferwicklungen (4; 31, 32, 33) des Speisegenerators (5; 34) und die Läuferwicklungen (2; 27, 28, 29) des Erregergenerators (3) schleifringkontaktfrei miteinander elektrisch verbunden sind.

2. Stromeinspeiseeinrichtung nach Anspruch 1,
**dadurch gekennzeichnet, dass**
• die Läuferwicklungen (4, 2) des Speise- und des Erregergenerators (5, 3) über eine an der Achse (1) befestigte Gleichrichterschaltung (11) elektrisch miteinander verbunden sind.

3. Stromeinspeiseeinrichtung nach Anspruch 1,
**dadurch gekennzeichnet, dass**
• die Läuferwicklungen (31, 27) des Speise- und des Erregergenerators (34, 26) jeweils mindestens zweiphasig ausgebildet sind und
• mindestens eine Läuferwicklung (31, 27) des Speise - und des Erregergenerators (34, 26) überkreuzt miteinander elektrisch verbunden sind.

4. Stromeinspeiseeinrichtung nach einem der vorangehenden Ansprüche,
**dadurch gekennzeichnet, dass**
• eine Überwachungseinheit vorhanden ist, die über Überwachungsausgange mit mindestens einer Generatorwicklung (37) des Speisegenerators (34) verbunden ist, und
• die Überwachungseinheit als Stromdurchgangsprüfeinrichtung oder als Induktionspannungsmesseinrichtung ausgebildet ist.

5. Stromeinspeiseeinrichtung nach einem der vorangehenden Ansprüche,
**dadurch gekennzeichnet, dass**
• eine Überwachungseinrichtung vorhanden ist, die über Überwachungsausgänge mit mindestens einer ständerseitigen Erregerwicklung des Erregergenerators verbunden ist, und
• die Überwachungseinrichtung als Stromdurchgangsprüfeinrichtung oder als Induktionspannungsmesseinrichtung ausgebildet ist.

6. Stromeinspeiseeinrichtung nach einem der vorangehenden Ansprüche,
**dadurch gekennzeichnet, dass**
an eine Schnellbremsschleife (42) eine Reihenschaltung aus einem Ladekondensator (53) und mindestens einer Diode (52) angeschlossen ist und bei spannungsloser Schnellbremsschleife (42) selbsttätig eine elektrische Verbindung zwischen dem Ladekondensator (53) und den Erregerwicklungen (24, 25) des Erregergenerators (26) einschaltbar ist.

7. Stromeinspeiseeinrichtung nach einem der vorangehenden Ansprüche,
**dadurch gekennzeichnet, dass**
• über die Schnellbremsschleife eine Reihenschaltung einer Sicherheitsbatterie (47) und einer Diode (50) aktivierbar ist.

8. Stromeinspeiseeinrichtung nach einem der vorangehenden Ansprüche,
**dadurch gekennzeichnet, dass**
• dass bei einer Stromeinspeiseeinrichtung für eine als Wirbelstrombremse ausgebildete stromgespeiste Bremse (5) bei spannungsloser Schnellbremsschleife (42) selbsttätig eine elektrische Verbindung mit einem Gleichrichter (45) zwischen den Stromeingängen (39, 40) der Wirbelstrombremse (41) und den Erregerwicklungen (24, 25) des Erregergenerators (26) einschaltbar ist.

9. Stromspeiseeinrichtung nach Anspruch 8,
**dadurch gekennzeichnet, dass**
• die elektrische Verbindung als ein Einschaltelement einen Relaisschalter (43, 44) oder ein elektronisches Schaltelement aufweist.

10. Stromeinspeiseeinrichtung nach einem der vorangehenden Ansprüche,
**dadurch gekennzeichnet, dass**
• die bei einer Bewegung des Fahrzeugs angetriebene Achse (1) eine zur Bewegung des Fahrzeugs vorgesehene Achse ist.

11. Stromeinspeiseeinrichtung nach einem der Ansprüche 1 bis 9,
**dadurch gekennzeichnet, dass**
• die bei einer Bewegung des Fahrzeugs angetriebene Achse (1) eine generatoreigene Achse ist, die über ein Getriebe von einer zur Bewegung des Fahrzeugs vorgesehenen Achse angetrieben wird.

12. Stromeinspeiseeinrichtung nach Anspruch 11,
**dadurch gekennzeichnet, dass**
• das Getriebe ein Zahnriemengetriebe mit frei wählbarer Über- oder Untersetzung ist.

## Claims

1. Electric power supply for an electric brake (12; 41) of a vehicle, having
• a supply generator (5; 34) which serves to generate electrical energy for the electric brake (12; 41) and whose rotor windings (4; 31, 32, 33) are attached to an axle (1) which is driven when the vehicle moves and whose stator-side generator windings (7; 35, 36, 37) are connected to current inputs (39, 40) of the electric brake (12; 41),
**characterized in that**
• a control unit (10; 20) is provided for generating an actuation current (Ia) which is adapted to a respective braking request at that time, and **in that**
• rotor windings (2; 27, 28, 29) of an exciter generator (3) whose stator-side exciter windings (6; 24, 25) can be supplied with the actuation current (Ia) are also attached to the axle (1),
• wherein the control unit (10; 20) is connected on the input side to an on-board power system of the vehicle or a battery of the vehicle and on the output side to the exciter windings (6; 24, 25) of the exciter generator (3; 26), and
• wherein the rotor windings (4; 31, 32, 33) of the supply generator (5; 34) and the rotor windings (2; 27, 28, 29), of the exciter generator (3) are electrically connected to one another without slip ring contact.

2. Electric power supply according to Claim 1,
**characterized in that**
• the rotor windings (4, 2) of the supply generator (5) and of the exciter generator (3) are electrically connected to one another via a rectifier circuit (11) which is attached to the axle (1).

3. Electric power supply according to Claim 1,
**characterized in that**
• the rotor windings (31, 27) of the supply generator (34) and of the exciter generator (26) are each embodied in at least two phases, and
• at least one rotor winding (31, 27) of the supply generator (34) and of the exciter generator (26) are electrically connected to one another in a criss-cross fashion.

4. Electric power supply according to one of the preceding claims,
**characterized in that**
• a monitoring unit is present which is connected via monitoring outputs to at least one generator winding (37) of the supply generator (34), and
• the monitoring unit is embodied as a current path testing device or as an induction voltage measuring device.

5. Electric power supply according to one of the preceding claims,
**characterized in that**
• a monitoring device is present which is connected via monitoring outputs to at least one stator-side exciter winding of the exciter generator,
and
• the monitoring device is embodied as a current passage testing device or as an induction voltage measuring device.

6. Electric power supply according to one of the preceding claims,
**characterized in that**
• a series circuit composed of a charging capacitor (53) and at least one diode (52) is connected to a rapid braking loop (42), and when the rapid braking loop (42) is voltageless an electrical connection can be automatically switched on between the charging capacitor (53) and the exciter windings (24, 25) of the exciter generator (26).

7. Electric power supply according to one of the preceding claims,
**characterized in that**
• a series circuit of a safety battery (47) and a diode (50) can be activated via the rapid braking loop.

8. Electrical power supply according to one of the preceding claims,
**characterized in that**
• in the case of an electric power supply for an electric brake (5) which is embodied as an eddy current brake an electrical connection to a rectifier (45) can be automatically switched on between the current inputs (39, 40) of the eddy current brake (41) and the exciter windings (24, 25) of the exciter generator (26) when the rapid braking loop (42) is voltageless.

9. Electric power supply according to Claim 8,
**characterized in that**
• the electrical connection has as a switch-on element a relay switch (43, 44) or an electronic switching element.

10. Electric power supply according to one of the preceding claims,
**characterized in that**
• the axle (1) which is driven when the vehicle moves is an axle which is provided for moving the vehicle.

11. Electric power supply according to one of Claims 1 to 9,
**characterized in that**
• the axle (1) which is driven when the vehicle moves is a generator-specific axle which is driven by an axle provided for moving the vehicle, via a gear mechanism.

12. Electric power supply according to Claim 11,
**characterized in that**
• the gear mechanism is a toothed belt mechanism with a freely selectable step-up or step-down transmission ratio.

## Revendications

1. Dispositif d'alimentation en courant pour un frein ( 12 ; 41 ) alimenté en courant d'un véhicule, comprenant
• un générateur ( 5 ; 34 ) d'alimentation, qui sert à produire de l'énergie électrique pour le frein ( 12 ; 41 ) alimenté en courant, dont les enroulements ( 4 ; 31, 32, 33 ) rotoriques sont fixés sur un axe ( 1 ) entraîné lorsque le véhicule se déplace et dont les enroulements ( 7 ; 35, 36, 37 ) du générateur du côté du stator sont raccordés à des entrées ( 39, 40 ) de courant du frein ( 12 ; 41 ) alimenté en courant,
**caractérisé en ce que**
• il est prévu un appareil ( 10 ; 20 ) de commande pour la production d'un courant ( Ia ) de commande adapté à une demande présente de frein et **en ce que**
• sur l'axe ( 1 ) sont fixés aussi des enroulements ( 2 ; 27, 28, 29 ) rotoriques d'un générateur ( 3 ) d'excitation, dont les enroulements ( 6 ; 24, 25 ) d'excitation du côté du stator peuvent être alimentés en le courant ( Ia ) de commande,
• dans lequel l'appareil ( 10 ; 20 ) de commande est raccordé du côté de l'entrée à un réseau de bord du véhicule ou à une batterie du véhicule et du côté de la sortie aux enroulements ( 6 ; 24, 25 ) d'excitation du générateur ( 3 ; 26 ) d'excitation et
• dans lequel les enroulements ( 4 ; 31, 32, 33 ) rotoriques du générateur ( 5 ; 34 ) d'alimentation et les enroulements ( 2 ; 27, 28, 29 ) rotoriques du générateur ( 3 ) d'excitation sont reliés électriquement entre eux sans contact par bague collectrice.

2. Dispositif d'alimentation en courant suivant la revendication 1,
**caractérisé en ce que**
• les enroulements ( 4, 2 ) rotoriques du générateur ( 5 ) d'alimentation et du générateur ( 3 ) d'excitation sont reliés électriquement entre eux par en montage ( 11 ) redresseur fixé sur l'axe ( 1 ).

3. Dispositif d'alimentation en courant suivant la revendication 1,
**caractérisé en ce que**
• les enroulements ( 31, 27 ) rotoriques du générateur ( 34 ) d'alimentation et du générateur ( 26 ) d'excitation sont respectivement au moins biphasés et
• au moins un enroulement ( 31, 27 ) rotorique du générateur ( 34 ) d'alimentation et du générateur ( 36 ) d'excitation sont reliés électriquement entre eux en croix.

4. Dispositif d'alimentation en courant suivant l'une des revendications précédentes,
**caractérisé en ce que**
• il y a une unité de contrôle, qui est reliée à au moins un enroulement ( 37 ) du générateur ( 34 ) d'alimentation par des sorties de contrôle et
• l'unité de contrôle est constituée sous la forme d'un dispositif de contrôle du passage du courant ou sous la forme d'un dispositif de mesure d'une tension d'induction.

5. Dispositif d'alimentation en courant suivant l'une des revendications précédentes,
**caractérisé en ce que**
• il y a un dispositif de contrôle, qui est relié à au moins un enroulement du côté du stator du générateur d'excitation par des sorties de contrôle et
• le dispositif de contrôle est sous la forme d'un dispositif de contrôle du passage du courant ou sous la forme d'un dispositif de mesure d'une tension d'induction.

6. Dispositif d'alimentation en courant suivant l'une des revendications précédentes,
**caractérisé en ce qu'**à une boucle ( 42 ) de freinage rapide est raccordé un montage série composé d'un condensateur ( 53 ) de charge et d'au moins une diode ( 52 ) et, pour une boucle ( 42 ) de freinage rapide sans tension, une liaison électrique peut être établie automatiquement entre le condensateur ( 53 ) de charge et les enroulements ( 24, 25 ) du générateur ( 26 ) d'excitation.

7. Dispositif d'alimentation en courant suivant l'une des revendications précédentes,
**caractérisé en ce que**
• un montage série d'une batterie ( 47 ) de sécurité et d'une diode ( 50 ) peut être activé par la boucle de freinage rapide.

8. Dispositif d'alimentation en courant suivant l'une des revendications précédentes,
**caractérisé en ce que**,
• pour un dispositif d'alimentation en courant d'un frein ( 5 ) alimenté en courant et constitué sous la forme d'un frein à courants de Foucault, alors que la boucle ( 42 ) de freinage rapide est sans tension, une liaison électrique avec un redresseur ( 45 ) peut être réalisée automatiquement entre les entrées ( 39, 40 ) de courant du frein ( 41 ) à courants de Foucault et les enroulements ( 24, 25 ) du générateur ( 26 ) d'excitation.

9. Dispositif d'alimentation en courant suivant la revendication 8,
**caractérisé en ce que**
• la liaison électrique a comme élément de connexion un commutateur relais ( 43, 44 ) ou un élément électronique de commutation.

10. Dispositif d'alimentation en courant suivant l'une des revendications précédentes,
**caractérisé en ce que**
• l'axe ( 1 ) entraîné lorsque le véhicule se déplace est un essieu prévu pour le déplacement du véhicule.

11. Dispositif d'alimentation en courant suivant l'une des revendications 1 à 9,
**caractérisé en ce que**
• l'axe ( 1 ) entraîné lorsque le véhicule se déplace est un axe propre à un générateur, qui est entraîné par une transmission d'un essieu prévu pour le déplacement du véhicule.

12. Dispositif d'alimentation en courant suivant la revendication 11,
**caractérisé en ce que**
• la transmission est une transmission à courroie dentée à multiplication ou à démultiplication pouvant être choisie à volonté.
